# EUROPEAN PATENT APPLICATION

(11) **EP 2 277 832 A1**
(43) Date of publication of application: **26.01.2011**
(21) Application number: 10170314.8
(22) Date of filing: 21.07.2010
(51) Int. Cl.: C02F 1/00

(54) **A water filter jug hopper**

(30) Priority: 21.07.2009 IE 20090570
(71) Applicant: Terraillon Holdings Limited, Dublin 4 (IE)
(72) Inventor: Macmahon, Diarmuid, 14, Dublin (IE); Dubois, Cedric, F-78403, Chatou Cedex (FR)
(74) Representative: O'Neill, Brian

(57) **Abstract**

The present invention provides a water filter jug hopper (10), and a water filter jug incorporating same, which defines a base (18) and an opening in the base for receiving a first filter cartridge (22), the hopper further including a removable insert (32) which reduces the effective area of the opening in the base to receive a second filter cartridge (30) of smaller cross-sectional area.
The insert (32) may comprise a plate which is insertable into the hopper to overlie the base (18). The plate has a circular opening (34) whose area is less than the area of the opening (20) in the base (18).

## Description

### Field of the invention

This invention relates to a hopper for a water filter jug, and a water filter jug incorporating said hopper, which is capable of receiving different size/shape filter cartridges.

### Background of the invention

A water filter jug hopper is a water container which forms a permanent or replaceable interior compartment of a water jug and which is adapted to hold a replaceable water filter cartridge so that water poured into the container passes through the filter into the jug proper.

### Summary of the invention

According to a first aspect of the present invention there is provided a hopper for a water filter jug, the hopper comprising a water container having a base and an opening in the base for receiving a first filter cartridge having a cross-section which fits within the opening so that water introduced into the container flows through the filter cartridge, the hopper further including a removable insert which reduces the effective area of the opening in the base to receive a second filter cartridge of smaller cross-sectional area. Preferably the insert comprises a plate which is insertable into the hopper to overlie the base, the plate having an opening whose area is less than the area of the opening in the base and which lies within the periphery of the opening in the base.

The hopper may include a sealing means between the edge of the plate and the base.

Preferably, the opening in the base is of a different shape to the opening in the plate.

Preferably, the opening in the base and/or the opening in the plate defines a lip about the periphery of the opening on which, in use, a respective filter cartridge sits.

According to a second aspect of the present invention there is provided a water filter jug comprising a water filter jug hopper according to the first aspect of the invention.

Preferably, the water filter jug comprises a first filter cartridge shaped and dimensions to fit within the opening in the base.

Preferably, the water filter jug comprises a second filter cartridge shaped and dimensioned to fit within the opening in the plate.

### Brief description of the drawings

An embodiment of the invention will now be described, by way of example, with reference to the accompanying drawings, in which:
Figure 1 is a perspective view of a water filter jug hopper and a first type of water filter cartridge usable with such hopper.
Figures 2 and 3 are perspective and top views respectively of the hopper of Figure 1 with the cartridge fitted.
Figure 4 is a cross-section of the hopper of Figure 1 with the cartridge fitted.
Figure 5 is a perspective view of the hopper of Figure 1 and an insert to allow use of the hopper with a second type of filter cartridge.
Figure 6 is a top view of the hopper of figure 5 with the cartridge fitted.
Figure 7 is a cross-section of the hopper of Figure 5 with the cartridge fitted.

### Detailed description of the drawings

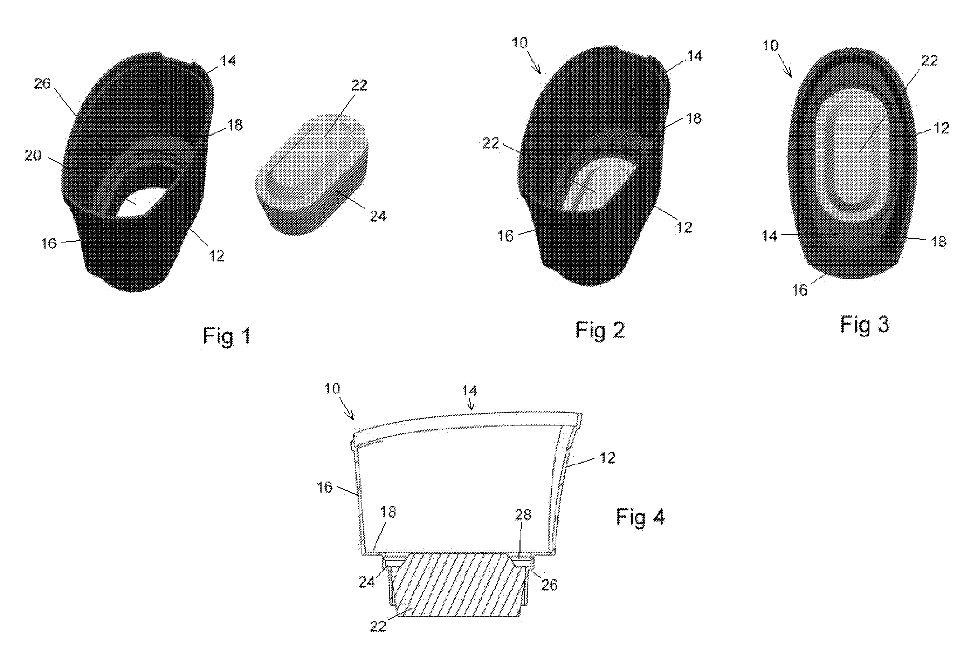

Referring to Figure 1 to 4, a hopper 10 for a water filter jug (not shown) comprises a water container 12 having an open top 14, downwardly convergent sidewalls 16 and a base 18. The base has a generally oval opening 20 for receiving a particular type of standard or first filter cartridge 22, in the present embodiment a Brita® cartridge. The cartridge 22 has a narrow shoulder 24 which sits on a narrow ledge 26 around the edge of the opening 20. The cross-section of the cartridge 22 is such as to fit snugly within the opening 20, so that water poured into the container 12 through the open top 14 flows substantially entirely through the filter cartridge 22 rather than between the filter cartridge and the edge of the opening 20. Sealing means in the form of a rubber 0-ring 28 (Figure 4) may be provided around the periphery of the cartridge 22 to seal any gap between the periphery of the cartridge and the edge of the opening 20.

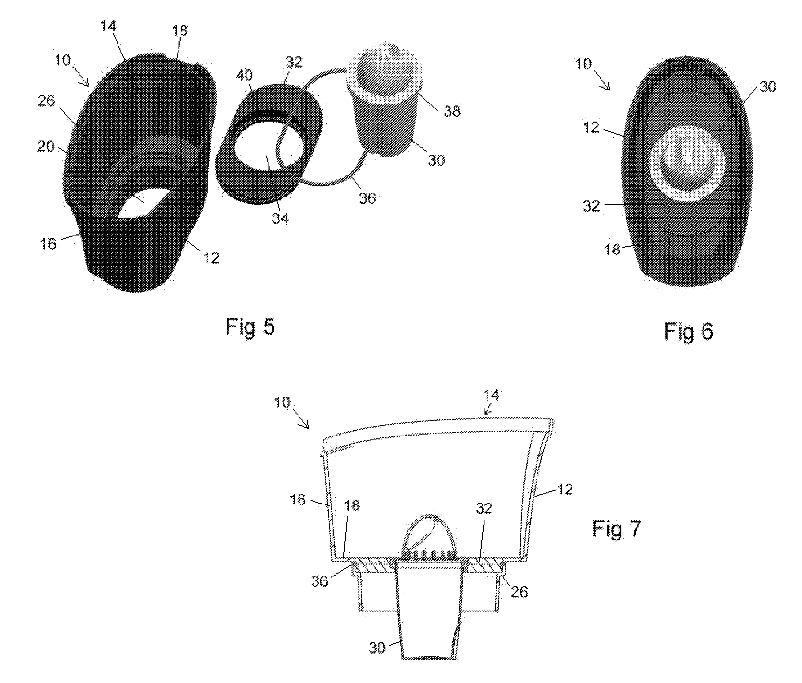

Referring now to Figure 5 to 7, to allow the hopper 10 to be used with a different or second type of standard filter cartridge, such as a Terraillon filter cartridge 30 which has a generally circular cross-section substantially smaller in area than the opening 20, the hopper 10 includes a removable insert 32 which reduces the effective area of the opening 20 to that of the cross-section of the second cartridge 30.

The insert 32 comprises a plate which is insertable into the hopper to overlie the base 18. The plate has a circular opening 34 whose area is less than the area of the opening 20 in the base 18 and which lies wholly within the periphery of the opening 20.

The edge of the plate 32 is supported on the ledge 26 and sealing means in the form of a rubber 0-ring 36 is provided between the edge of the plate 32 and the base 18 to seal any gap between the two. The cartridge 30 is supported in the opening 34 in a similar manner to the way the cartridge 22 is supported in the opening 20. Thus, the cartridge 30 has a narrow shoulder 38 which sits on a narrow ledge 40 around the edge of the opening 34, and the cross-section of the cartridge 30 is such as to fit snugly within the opening 34.

The water container 12 and insert 32 may be moulded from a rigid plastics material. The water container 12 may be formed as an integral or permanent part of a water filter jug, or as a removable part to allow the jug to be used in a conventional (non-filter) manner.

It will be appreciated that the water container 12, and the first and second filter cartridges 22, 30 may be of a different shape and/or dimension than those shown, with corresponding alterations then being necessary to the shape/size of the opening 20. The creation of a seal between the cartridges 20, 30 and the water container 12 may also be achieved in any other suitable manner.

## Claims

1. A water filter jug hopper, the hopper comprising a water container having a base and an opening in the base for receiving a first filter cartridge having a cross-section which fits within the opening so that water introduced into the container flows through the filter cartridge, the hopper further including a removable insert which reduces the effective area of the opening in the base to receive a second filter cartridge of smaller cross-sectional area.

2. A hopper according to claim 1 in which the insert comprises a plate which is insertable into the hopper to overlie the base, the plate having an opening whose area is less than the area of the opening in the base and which lies within the periphery of the opening in the base.

3. A hopper according to claim 1 or 2 comprising sealing means between the edge of the plate and the base.

4. A hopper according to any preceding claim in which the opening in the base is of a different shape to the opening in the plate.

5. A hopper according to any preceding in which the opening in the base and/or the opening in the plate defines a lip about the periphery of the opening on which, in use, a respective filter cartridge sits.

6. A water filter jug comprising a water filter jug hopper according to any preceding claim.

7. A water filter jug according to claim 6 comprising a first filter cartridge shaped and dimensions to fit within the opening in the base.

8. A water filter jug according to claim 7 comprising a second filter cartridge shaped and dimensioned to fit within the opening in the plate.
